Europäisches Patentamt

European Patent Office

Office européen des brevets

(19)

(11) Publication number: **0 434 171 A1**

(12) # EUROPEAN PATENT APPLICATION

(21) Application number: **90203506.2**

(22) Date of filing: **21.12.90**

(51) Int. Cl.5: **A22C 9/00**

(30) Priority: **22.12.89 NL 8903150**

(43) Date of publication of application:
**26.06.91 Bulletin 91/26**

(84) Designated Contracting States:
**BE DE DK GB NL**

(71) Applicant: **STORK PROTECON B.V.**
**Industrielaan 63**
**NL-5349 AE Oss(NL)**

(72) Inventor: **Klaassen, Lambertus Gerardus Maria**
**Eikenburglaan 23**
**NL-5248 BJ Rosmalen(NL)**

(74) Representative: **Hoorweg, Petrus Nicolaas et al**
**OCTROOIBUREAU ARNOLD & SIEDSMA**
**Sweelinckplein 1**
**NL-2517 GK The Hague(NL)**

(54) Method and device for processing pieces of meat.

(57) A method and a device for processing meat pieces in order to obtain an edible product such as bacon, wherein the pieces of meat undergo a pretreatment in the form of brining, wherein the pieces of meat are grouped into a package, wherein the package is placed under a pressure variation in order to cause the individual pieces of meat in the package to contract and expand in order to obtain a better distribution of the brine through the meat and whereas secretion of the brine is prevented.

FIG.2

EP 0 434 171 A1

# METHOD AND DEVICE FOR PROCESSING PIECES OF MEAT

The invention relates to a method for processing meat pieces in order to obtain a consumable product such as bacon, wherein the pieces of meat undergo a pre-treatment in the form of brining.

The brining of meat is generally known and serves inter alia to increase the shelf-life of the meat. According to a traditional method a saline solution is injected into a piece of meat to a determined percent by weight. It has been found that a part of the saline solution is secreted from the meat, thereby resulting in loss of weight and a less appetizing appearance when packed. Proposals have already been made to obviate this drawback which involved the meat being placed in a brining bath for two or more days and being subsequently drained, whereafter a stable percent of weight added to the piece of meat is obtained. The drawback to this method is that a great deal of time is involved, i.e. about a week.

The invention has for its object to speed up the method according to the preamble.

The method according to the invention is distinguished in that the pieces of meat are grouped into a package, wherein the package is placed under a pressure variation in order to cause the individual pieces of meat in the package to contract and expand.

The invention is based on the idea that the meat pieces have to be subjected to a pressure treatment in order to reduce the localized brine concentrations caused by the injecting, that is, to better distribute the brine through the meat, whereby secretion of brine is prevented. The distribution is brought about by the expanding and contracting of the meat piece in the package.

According to a first possible embodiment of the invention the package is agitated at least once during a predetermined time period, this such that a small relative movement and thereby a pressure change between the pieces of meat is brought about without substantial change in the structure and shape of the package.

Due to the agitation the meat pieces will perform the desired pressure variation on each other without there being any massaging involved.

According to a second possible embodiment the package is placed, at least for a part of the time, pneumatically under a pressure varying from the atmospheric pressure.

The desired pressure variation is herewith also exerted on the meat pieces. A combination of agitation and pneumatic pressure variation can likewise be employed.

According to a further feature of the invention agitation takes place by causing the package to turn through one or more revolutions. Due to this turning movement the pieces of meat in the package will undergo the desired small movement relative to each other.

It has been found in practice that agitation is preferably performed four times by causing the package to turn each time through six rotations during a period of one minute.

According to a further development the pneumatic pressure is released between each agitation time period. The process is hereby broken up into sub-processes.

It has been established through tests that injecting of the meat piece to a percent by weight of 18.5 to 19% saline solution brings about an end result of 18% added weight in the meat piece.

The invention further relates to a device for performing the above described method. The device according to the invention is distinguished by a holder for receiving a package of meat pieces, an airtight envelope receiving the holder, vacuum means connected to this airtight envelope and means for setting at least the holder into agitation.

It is possible with the device according to the invention to agitate the holder under vacuum for a prescribed time, wherein the holder preserves the shape of the package while nevertheless allowing a mutual movement and free expanding and/or contracting of the meat pieces in the package.

In order to accelerate the production cycles it is recommended to provide the envelope with a loading opening and to arrange the holder releasably in the envelope. More than one holder can hereby be used for shaping the packages which are arranged successively in the envelope for the purpose of performing the method.

The holder is preferably bin-like and provided with a closing element for closing the open side of the holder. The closing element can herein be arranged fixedly in the envelope, wherein a pressure member is present in the envelope to press the holder placed in the envelope against the closing element. For easy maneuvering the holder is provided with wheels, wherein the envelope is embodied with a wheel guiding extending into the envelope from the loading opening.

The agitation means can be embodied according to the invention in the preferred embodiment as a frame rotatably mounted in the envelope in which frame the closing element, the wheel guiding and the or each pressure member are supported.

Above mentioned and other features of the invention will be further elucidated in the figure description hereinbelow of an embodiment. In the drawing:

Fig. 1 shows a schematic side view of a device provided with loading and discharge means for a bin-like holder for one package of meat,

fig. 2 is a perspective view, with partly broken away portions, of an airtight envelope having placed therein the frame for the holders for agitating.

The device shown in the figures is particularly intended to perform the method in sub-atmospheric conditions and consists of holders 1 which take a bin-like form and which are transported via the arrow P1 through an airtight envelope 2. Envelope 2 is embodied to this end with a loading opening which is closable by a sealing means 3 and with a discharge opening which is closable by a sealing means 4. The holders 1 can be removed from the envelope via arrow P2.

The holders 1 are provided with wheels 5 such that they can be rolled along manually.

Arranged adjacent to the loading opening and the discharge opening is a lifting device 6 provided with a carrier 7 which via a parallel construction 8 can be moved from a low position, in which the holders can be carried into the carrier 7, to a high position in which holders 1 can be rolled into the envelope 2.

The driving of the lifting devices 6 is not shown and can be carried out in any random manner, for instance by hydraulic cylinders. The carrier 7 is embodied with a wheel guiding system which connects onto a wheel guiding 9 in the envelope, which is further elucidated below.

The length of the envelope 2 and the wheel guiding 9 is, as seen in the transporting direction, at least twice the length of the holders 1, so that two or more holders 1 can be arranged at a time in the envelope 2.

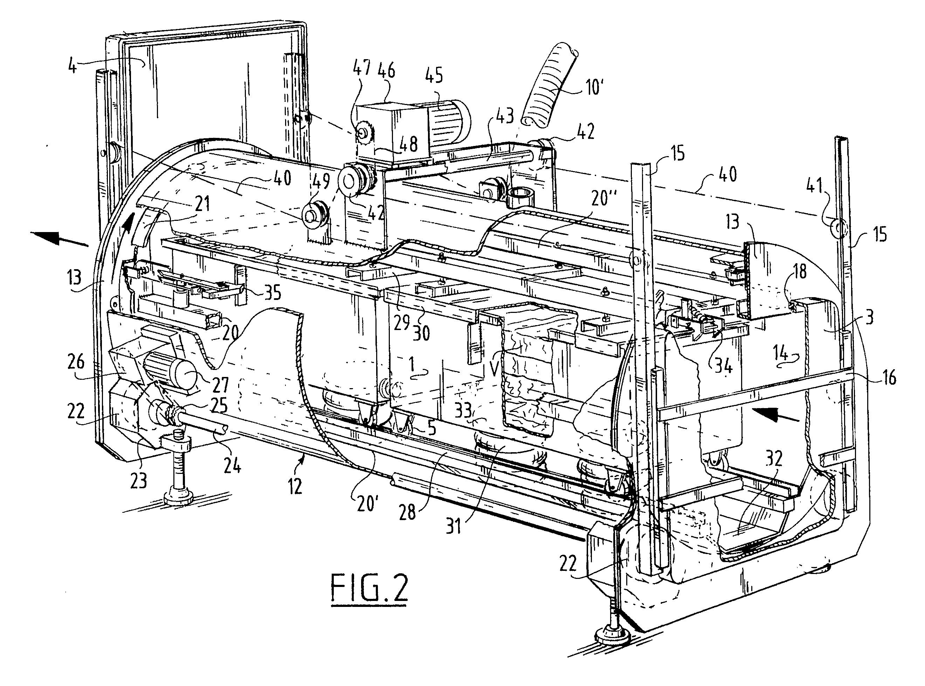

The envelope 2 is additionally provided with means 10 for applying a sub-atmospheric pressure in the airtight envelope 2. Finally, the envelope 2 is provided with agitation means in order to set into motion the holders 1 with the meat pieces stored therein such that the desired agitation of the meat pieces can take place. These agitation means are further elucidated with reference to fig. 2.

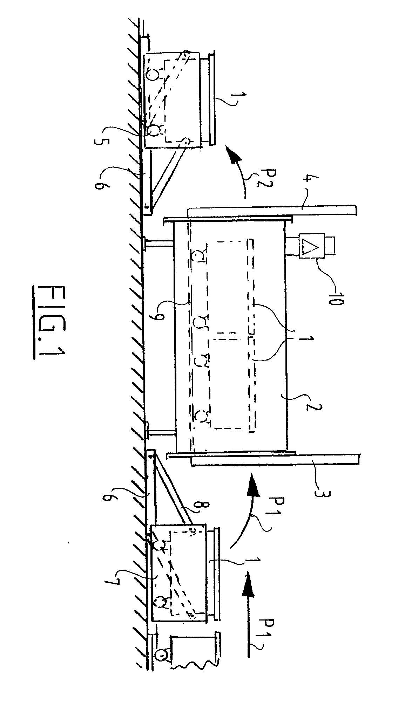

Fig. 2 shows a perspective view of an envelope which can be used in the device according to fig. 1.

Envelope 2 is substantially formed by a cylindrical wall 12 closed off at both ends with an end wall 13. The end wall has the loading opening 14 which is closable by the sealing means 3, here in the form of a sliding hatch. The other end wall 13 is provided with the discharge opening which can likewise be sealed by a sealing means in the form of a sliding hatch 4.

For this purpose each end wall 13 is embodied with a vertically standing guiding in the form of two profiles 15, along which a cradle 16 can slide in vertical direction. Cradle 16 has two horizontally running strips 17 which are connected to the sliding hatch 3 constructed of plate material. The end edge of the sliding hatch 3 remote from the strips 17 is provided with a sealing strip 18 which can come into close-fitting contact with the outer surface of end wall 13. This sealing strip 18 follows the peripheral edge of the loading opening 14 and the discharge opening in the other end wall such that when a sub-atmospheric pressure is applied in envelope 12 the sealing strip 18 is pressed firmly against the outer surface of the end walls 13 in order to obtain an airtight closure between the respective sliding hatches 3 and 4 and the adjoining end wall 13.

The cradle 16 with sliding hatch 3 can be moved upward along the guiding 15 by two pulling cables 40 connected to the cradle 16 via reversing wheels 41 mounted rotatably on the vertical profiles 15.

The other end of the pulling cables 40 is connected to a reel 42 which is fixed to a drive shaft 43. Drive shaft 43 is mounted in a bracket 44 on the airtight envelope 12, which bracket 44 also bears a drive motor 45 with transmission 46. The output shaft 47 of a transmission drives the shaft 43 via a chain gearing 48. The pulling cables 40 connected to the cradle 16 of sliding hatch 4 are connected to reel 42 via a guide wheel 49.

Arranged in the cylindrical envelope 12 is a frame 20 consisting of longitudinal beams and two circular guide tracks 21 arranged at the ends of beams 20. These guide tracks 21 rest on supporting wheels 22 which are accommodated in a chamber 23 of the airtight envelope 12.

The drive rollers 22 arranged on the same side of the airtight envelope 12 are mutually coupled by a connecting shaft 24 provided with chain wheels 25. The chain wheels are driven by a drive motor 27 via a chain gearing 26. In this way the drive rollers 22 can be set into rotation, and therewith the guide track 21 and the frame formed by the beams 20 connected thereto. A pair of beams 20' on the underside of the frame are each embodied with a guide rail 28 for receiving the wheels 5 of the holders 1 for placing in the envelope.

Two upper beams 20" are provided with cross beams 29 against which is fixed a closing element 30, the periphery of which corresponds with the upper edge of the bin-like holder 1. The closing element 30 has to be embodied such that although vacuum can be admitted into the holder 1 the package of meat V in the holder does not change shape.

The frame 20 further bears one or more bellows-like bodies 31 in between the wheel guiding profiles 28, which bellows-like bodies 31 support on a bottom plate 32 of the frame. The upper wall 33 of each bellows-like body 31 can move in the direction of the closing element 30 as a consequence of the flexibility of the side wall of the bellows 31. The action hereof is further elucidated hereinafter.

Finally, it is noted that the holders 1 are fixedly clamped in the frame 20 by means of clamps 34 at the front and rear side of holders 1 and clamps 35 on the standing side thereof.

The above described device operates as follows.

After placing a holder 1 via the loading opening 14 in the front wall 13 of the airtight envelope 12, the sliding hatch 3 can be carried downward to the position shown in fig. 2. It is assumed that the sliding hatch 4 likewise closes off the discharge opening of the airtight envelope 12. The holder 1 is situated in the right-hand position and therefore beneath the closing element 30. By applying a sub-atmospheric pressure in the airtight envelope 12 via the hose 10' connected to the vacuum means 10, the bellows-like bodies 31 will expand owing to the pressure present therein, whereby the upper wall 33 comes into contact with the bottom wall of holder 1. This presses the edge of holder 1 against the closing element 30 whereby the meat pieces V arranged form-fittingly in holder 1 are completely enclosed. A sub-atmospheric pressure nevertheless also prevails in holder 1. By energizing the motor 27 the drive rollers 22 are driven whereby the frame 20 will begin to rotate in the airtight envelope 12. According to the invention it is sufficient to perform six rotations four successive times to sufficiently agitate the contents of holder 1. Each cycle of six rotations lasts more or less a minute. After each cycle the pressure is released in the airtight envelope 12. After two cycles a subsequent holder 1 can be placed in the holder 1 via opening of sliding hatch 3, wherein the first holder comes to stand in the left-hand position and the new holder in the right-hand position of the airtight envelope 12. After completed treatment of the contents of holder 1 this can be carried away via the discharge opening after sliding up hatch 4.

The invention is not limited to the above described embodiment. It is for instance possible to otherwise embody the agitation means in the airtight envelope 12, for example by means of eccentric masses, the vibrating action of which can be exerted on holder 1. Nor is it necessary to realize a complete rotation, as a rocking movement can be exerted by the motor 27 on the guide track 21 and therefore on the frame 20.

The shown closing means in the form of sliding hatches 3, 4 can be replaced by any suitable means, all the more so if use is made not of sub-atmospheric operating pressures but of super-atmospheric pressures.

In the latter case the closure of the holders in the airtight envelope has to be embodied otherwise than with the bellows shown.

The bin-like holders 1 shown can be replaced by any other form-retaining means.

**Claims**

1. Method for processing meat pieces in order to obtain a consumable product such as bacon, wherein the pieces of meat undergo a pretreatment in the form of brining, **characterized** in that the pieces of meat are grouped into a package, wherein the package is placed under a pressure variation in order to cause the individual pieces of meat in the package to contract and expand.

2. Method as claimed in claim 1, **characterized** in that the package is agitated at least once during a predetermined time, this such that a small relative movement and thereby a pressure change between the pieces of meat is brought about without substantial change in the structure and shape of the package.

3. Method as claimed in claim 2, **characterized** in that the agitation is carried out by causing the package to turn through one or more rotations.

4. Method as claimed in claims 2 and 3, **characterized** in that agitation is performed four times by causing the package to turn each time through six rotations during a time period of one minute.

5. Method as claimed in claim 1, **characterized** in that the package is placed, at least for a part of the time, pneumatically under a pressure varying from the atmospheric pressure.

6. Method as claimed in claims 1-5, **characterized** in that the package is placed pneumatically under pressure during agitation and the pressure is released between each agitation time period.

7. Method as claimed in any of the foregoing claims, **characterized** in that prior to being formed into a package the meat pieces are brined to a percent by weight of 18.5 to 19%.

8. Device for performing the method as claimed in the foregoing claims, **characterized** by a holder (1) for receiving a package of meat pieces (V), an airtight envelope (12) receiving the holder (1),
vacuum means (10) connected to this airtight envelope (12) and means (20) for setting at least the holder into agitation.

9. Device as claimed in claim 8, characterized in that the envelope is provided with a loading opening and the holder can be placed releasably in the envelope.

10. Device as claimed in claim 8 and/or 9, **characterized** in that the holder is bin-shaped, wherein a closing element is arranged for closing the open side of the holder.

11. Device as claimed in claim 10, **characterized** in that the closing element is a part of a frame arranged movably in the envelope, in which frame the holder can be placed.

12. Device as claimed in claims 10 and 11, **characterized** in that the frame is provided with a pressure member (31) arranged opposite the closing element (30).

13. Device as claimed in claim 12, **characterized** in that the pressure member is a pressure chamber closed off from the envelope space and having a wall movable towards the closing element.

14. Device as claimed in claim 13, **characterized** in that the pressure member is a bellows.

15. Device as claimed in any of the foregoing claims 8-14, **characterized** in that the bin-like holder (1) is provided with wheels (5) and the frame (20) is provided with a wheel guiding (28) extending into the airtight envelope (12) from the loading opening (14).

16. Device as claimed in claims 8-15, **characterized** in that the frame is provided with two circular guide tracks (21) wherein the frame is supported on drive and guide rollers (22) rotatably mounted inside the envelope (12).

FIG.1

FIG.2

EP 0 434 171 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 211 817  (LIESENFELD)<br>* the whole document * | 1,5 | A 22 C 9/00 |
| Y,A | DE-A-2 807 059  (MOEHLMANN)<br>* the whole document * | 1-3,8,9,<br>15,7,10 | |
| Y,A | GB-A-1 232 905  (FALBORG)<br>* page 1, line 94 - page 2, line 53; claims 1-3 * | 1-3,8,9,<br>15,16 | |
| A | EP-A-0 172 497  (HANDSCHE)<br>* the whole document * | 1,5,8-11,<br>13,15 | |
| A | WO-A-8 908 982  (PROSENBAUER)<br>* the whole document * | 1-3,5,<br>8-10 | |
| A | EP-A-0 274 334  (DREANO)<br>* claims 1-4 * | 5,6 | |
| A | CH-A-5 269 18  (SOMMER) | | |
| A | FR-A-2 607 363  (DREANO) | | TECHNICAL FIELDS SEARCHED (Int. Cl.5) |
| A | WO-A-8 201 640  (JENSEN) | | A 22 C |
| A | WO-A-8 101 249  (LANGEN) | | A 23 B<br>A 23 L |

The present search report has been drawn up for all claims

| Place of search | Date of completion of search | Examiner |
|---|---|---|
| The Hague | 28 February 91 | DE LAMEILLIEURE D. |